# EUROPÄISCHE PATENTSCHRIFT

(11) **EP 2 848 839 B1**
(45) Veröffentlichungstag und Bekanntmachung des Hinweises auf die Patenterteilung: **07.10.2020**
(21) Anmeldenummer: 14181932.6
(22) Anmeldetag: 22.08.2014
(51) Int. Cl.: F16G 11/06, B66D 3/00

(54) **VORRICHTUNG ZUM BEFESTIGEN EINES DRAHTSEILS**
DEVICE FOR FIXING A WIRE CABLE
DISPOSITIF DE FIXATION D'UN CÂBLE MÉTALLIQUE

(30) Priorität: 30.08.2013 CH 14912013
(43) Veröffentlichungstag der Anmeldung: 18.03.2015
(73) Patentinhaber: Rikli, Chrisian, 3626 Hünibach (CH)
(72) Erfinder: Rikli, Chrisian, 3626 Hünibach (CH)
(74) Vertreter: Luchs, Willi

(56) Entgegenhaltungen:
- DE-C- 192 367
- GB-A- 1 535 189

## Beschreibung

Die Erfindung betrifft eine Vorrichtung zum Befestigen eines Drahtseils, mit Klemmbacken, die mit Spannschrauben an das Drahtseil anpressbar sind.

Derartige Vorrichtungen werden beispielsweise zum Befestigen, Spannen oder Ziehen von Stahlseilen in Tragstrukturen von grossflächigen Dächern, Hängebrücken und Seilbahnen eingesetzt, wobei dies insbesondere bei der Montage bzw. beim Unterhalt der Anlagen erfolgt. Die dafür verwendeten Seile haben oft einen relativ grossen Durchmesser und sind auch hohen Zugkräften ausgesetzt.

Die Druckschrift GB-A-1 535 189 bezieht sich auf eine Kabelklemme, bei der ein Basismember und zwei an diesem gelenkig gelagerte Arme vorhanden sind, welche am gegenüberliegenden Ende mittels einer Schraubenverbindung aneinander befestigbar sind. Sowohl beim Basismember als auch bei den Armen sind jeweils Backen vorgesehen, welche innenseitig entsprechend den Durchmessern der Kabel geformt sind. Es ist aber nur eine einzige Schraubenverbindung vorgesehen, mittels der eine ungenügende Klemmkraft für die Anwendung bei Drahtseilen beispielsweise für Luftseilbahnen erzeugbar ist.

Im Dokument DE 192 367 C ist eine Befestigung von Drahtseilen und Kabeln offenbart, bei der Einzelteile als Klemmen mit jeweils einer schrägen Fläche ausgebildet sind. Es sind vier solcher Einzelteile durch Schrauben paarweise zueinander befestigt, die je eine Klemmbacke bilden. Diese paarweisen Einzelteile sind dann mit den gegenüberliegenden paarweisen Einzelteilen in symmetrischer Anordnung ebenfalls durch Schrauben verbindbar und sie sind mit zwei in eine parallele Richtung verlaufende Bohrungen und mit einer Bohrung quer dazu versehen. Damit bewirken diese vier Einzelteile nur ein Klemmen wie ein einzelnes Paar von Klemmbacken.

Der Erfindung liegt die Aufgabe zugrunde, eine Vorrichtung der eingangs genannten Art zu schaffen, die einen verhältnismässig leichten, kompakten und konstruktiv einfachen Aufbau aufweist und den Reibschluss zum Seil effizient umsetzt.

Diese Aufgabe wird erfindungsgemäss dadurch gelöst, dass die Vorrichtung durch paarweise vorgesehene Klemmbacken mit annähernd trapezförmigem Querschnitt gebildet ist, deren innere Schmalseiten das Seil in zwei senkrecht zueinander gerichteten Diametralebenen umfassen und deren äussere Breitseiten als Stützflächen für die vorzugsweise zweireihig angeordneten Spannschrauben dienen, wobei die Spannschrauben des einen Klemmbackenpaars raumsparend durch die Zwischenräume zwischen den Spannschrauben des anderen Klemmbackenpaars geführt sind.

Es ist dabei zweckmässig, den Querschnitt der Klemmbacken und die Zwischenräume zwischen den Spannschrauben so aufeinander abzustimmen, dass die Klemmbacken möglichst kleinbauend sind, ohne ihre Festigkeit und die Bewegungsfreiheit zueinander zu beeinträchtigen.

Es ist somit auf diese Weise möglich, die Vorspannkraft der Spannschrauben bestmöglich im Scheitelpunkt des darunter liegenden Seils gleichgerichtet an mindestens vier Punkten ins Seil einzuleiten. Zusätzlich kann die Vorspannkraft durch Einsetzen mehrerer Backenpaare im gleichen Längenabschnitt des Seils gegenüber herkömmlichen Klemmplatten um ein Mehrfaches erhöht und das Eigengewicht der Klemmbacken bei Einhaltung der erforderlichen Festigkeit merkbar minimiert werden.

Die Vorrichtung ist zudem durch den trapezförmigen Klemmbackenquerschnitt sehr kompakt und kann dadurch platzsparend eingesetzt werden. Das ist insbesondere der Fall, wenn die Vorrichtung im zusammengebauten Zustand einen prismatischen Körper bildet, der mit zwischen den Klemmbacken diagonal verlaufenden Trennfugen versehen ist.

Durch die zweireihige Anordnung der Spannschrauben können die Klemmbacken gleichmässig fest gegen das Seil angepresst werden. Dank der diagonal verlaufenden Trennfugen gilt das auch in einem bestimmten Umfang für abweichende Durchmesser des Seils.

Es ist in diesem Sinne vorteilhaft, wenn die Spannschrauben gleichmässig über die wirksame Baulänge der Klemmbacken verteilt sind, wobei jede Reihe Spannschrauben vorzugsweise die gleiche Anzahl Spannschrauben beinhaltet. Diese Anzahl wird zweckmässigerweise in Abhängigkeit vom Durchmesser und/oder der Zugbeanspruchung des zu befestigenden Seils festgelegt.

Zum Schonen des Seils ist es auch zweckmässig, die Klemmbacken an ihren schmalen Längsseiten mit über die wirksame Baulänge der Klemmbacken erstreckende Einlagen zu versehen, wobei das Material dieser Einlagen an den Kontaktflächen einen optimalen Form- und Reibschluss bildet.

Zur Verankerung der Klemmplatte infolge des Seilzugs kann diese stirnseitig abgestützt oder über angebaute Pollerplatten und über Seilstruppen in Gegenrichtung der Seilzugkraft abgespannt werden. In diesem Fall sieht die Erfindung vor, dass die Klemmvorrichtung vorzugsweise an dem einen Vorrichtungsende mit zwei daran befestigten Pollerplatten versehen ist, wobei als Befestigungsmittel vier Spannschrauben der Klemmvorrichtung dienen, die in diesem Fall nicht direkt gegen die Klemmbacken, sondern gegen die Pollerplatten abgestützt sind. Letztere sind zweckmässigerweise scheibenförmig ausgebildet und weisen eine umfängliche Ringnut auf, dies zur Aufnahme der Seilstruppe.

Zur Herstellung eines Formschlusses zwischen den Pollerplatten und der Vorrichtung sind die Pollerplatten mit entsprechenden Nocken versehen, die in entsprechende Aussparungen der Klemmbacken eingreifen. Auf diese Weise wird die Poller-Abspannvorrichtung in der Klemmvorrichtung integriert, ohne dass der Formschluss zwischen beiden Vorrichtungen die Klemmwirkung der Klemmbacken beeinträchtigt.

Die Erfindung ist nachfolgend anhand von Ausführungsbeispielen unter Bezugnahme auf die Zeichnung näher erläutert. Es zeigen:
- Fig. 1: eine erfindungsgemässe Klemmvorrichtung, in der Seitenansicht dargestellt,
- Fig. 2: einen Schnitt durch die Klemmvorrichtung entlang der Linie II-II gemäss Fig. 1,
- Fig. 3: die Klemmvorrichtung nach Fig. 1 teilweise im Schnitt und perspektivisch dargestellt,
- Fig. 4: eine perspektivisch gezeigte Variante einer Klemmvorrichtung aus Fig. 1 mit integrierter Poller-Abspannvorrichtung, und
- Fig. 5: die Variante nach Fig. 4 teilweise als Explosionszeichnung dargestellt.

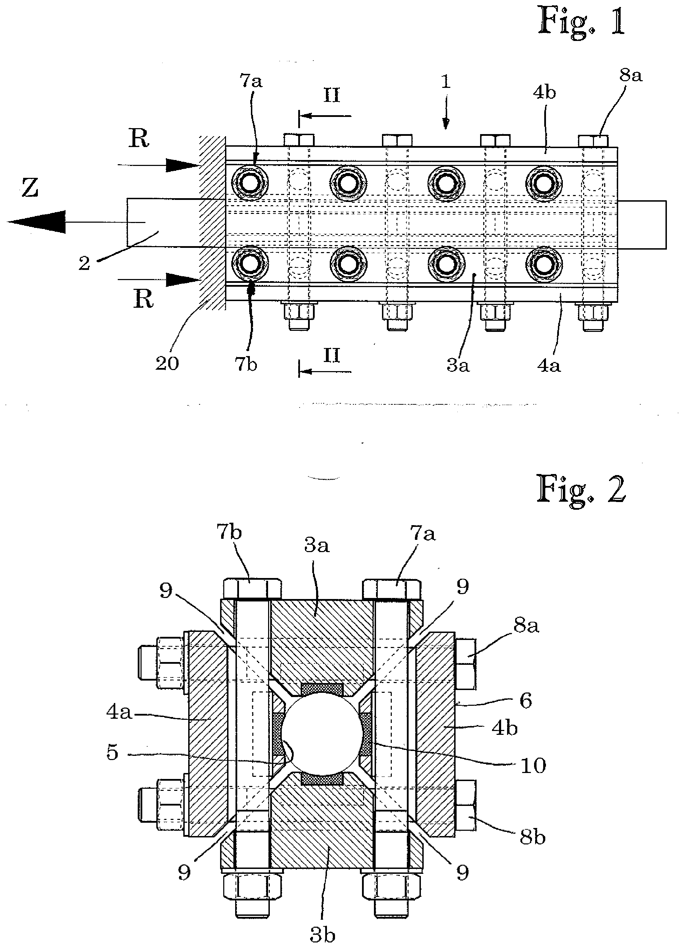

Fig. 1 bis Fig. 3 zeigen eine Klemmvorrichtung 1 zum Befestigen eines Drahtseils 2. Sie besteht aus zwei Paar Klemmbacken 3a, 3b und 4a, 4b mit trapezförmigem Querschnitt, deren inneren Schmalseiten 5 das Drahtseil 2 in zwei senkrecht zueinander gerichteten Ebenen umfassen und deren äusseren Breitseiten 6 als Stützflächen für zweireihig angeordnete Spannschrauben 7a, 7b bzw. 8a, 8b dienen, wobei die Spannschrauben 7a, 7b des einen Klemmbackenpaars 3a, 3b raumsparend durch die Zwischenräume zwischen den Spannschrauben 8a, 8b des anderen Klemmbackenpaars 4a, 4b geführt sind.

Die Dimensionierung dieser Zwischenräume ist mit der des Klemmbackenquerschnitts so abgestimmt, dass die Klemmbacken die erforderliche Festigkeit mit einem möglichst kleinen Eigengewicht aufbringen können. Die erfindungsgemässe Klemmvorrichtung hat somit zudem den Vorteil, dass die Spannkraft der Schraubenpaare an mindestens vier Stellen am Seilumfang parallel zur Zugrichtung direkt im Scheitelpunkt ideal eingeleitet wird, dies im Gegensatz zu herkömmlichen Vorrichtungen, denn es kann im gleichen Seilabschnitt durch die Klemmwirkung mehrerer Backenpaare die Vorspannkraft um ein mehrfaches erhöht werden. Hiermit wird die Gesamtbaulänge bei gleicher Seilzugkraft reduziert und zugleich die Effizienz bezüglich Reibschluss verbessert. Zwecks eines besonders kompakten Aufbaus bildet sie im zusammengebauten Zustand einen prismatischen Körper mit annähernd viereckigem Querschnitt, der zwischen den Klemmbacken 3a, 3b und 4a, 4b mit diagonal verlaufenden Trennfugen 9 versehen ist. Letztere ermöglichen eine gegenseitige Verschiebung der Klemmbacken. Die Vorrichtung ist dadurch innerhalb bestimmter Grenzen für Drahtseile mit abweichenden Durchmessern einsetzbar.

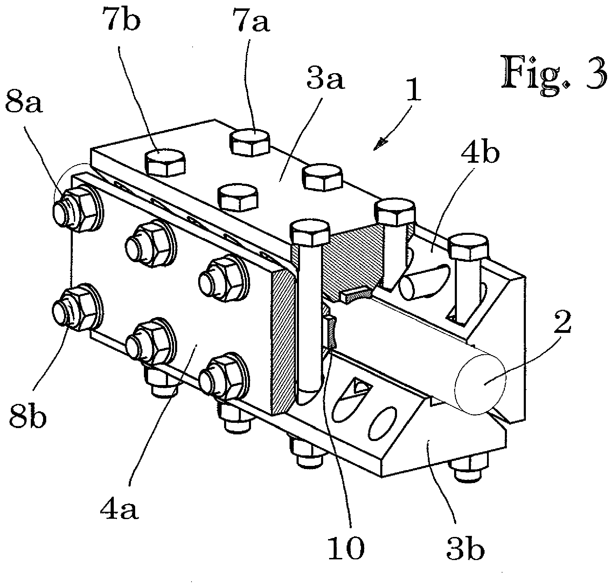

Wie aus Fig. 2 und Fig. 3 ersichtlich, sind die Klemmbacken 3a, 3b bzw. 4a, 4b an ihrer schmalen Längsseite mit Einlagen10 versehen, die sich über die wirksame Baulänge der Klemmbacken erstrecken und aus einem für Seil und Reibschluss geeigneten Material hergestellt sind. Die Einlagen 10 weisen leicht abgerundete Eingriffsflächen auf, deren Krümmung mit der des Seilumfangs korrespondiert. Damit wird das Drahtseil mit einer gleichmässigen, grossflächigen Klemmwirkung festgeklemmt. Die Auswahl des Einlagenmaterials ist abhängig von der Beschaffenheit des Drahtseils.

Die Spannschrauben 7a, 7b sind in jeder Reihe gleichmässig verteilt über die gesamte wirksame Baulänge der Klemmbacken angeordnet, wobei jede Reihe die gleiche Anzahl Spannschrauben beinhaltet. Auf diese Weise ist eine vollumfänglich gleichmässige Klemmwirkung erzielbar. Die Anzahl und/oder Stärke der Spannschrauben kann von Fall zu Fall in Abhängigkeit vom Durchmesser und /oder der Zugbeanspruchung des Drahtseils festgelegt werden.

Zum Aufspannen des Drahtseils 2 wird die Vorrichtung 1 gegen die stirnseitig vorgesehene Stützfläche eines Halteelements 20 abgestützt, welches der Zugkraft Z des Drahtseils mit einer entgegengerichteten Reaktionskraft R entgegenwirkt.

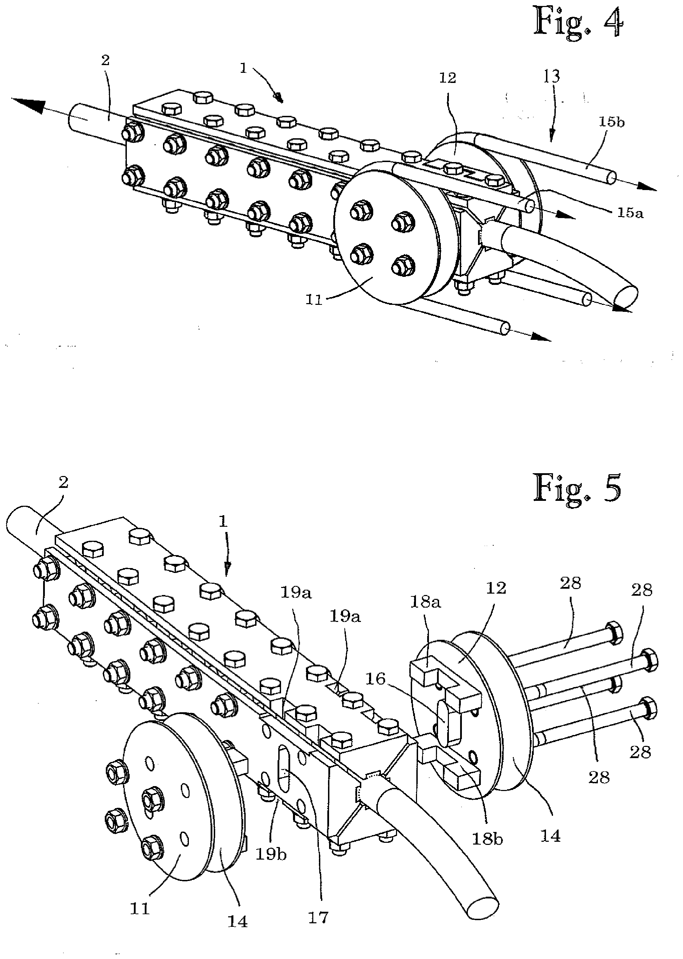

Die Variante gemäss Fig. 4 und Fig. 5 unterscheidet sich von der Klemmvorrichtung nach Fig. 1 bis Fig. 3 lediglich dadurch, dass sie an dem einen Vorrichtungsende mit vorzugsweise zwei daran befestigten Pollerplatten 11, 12 einer Poller-Abspannvorrichtung 13 versehen ist, wobei als Befestigungsmittel vier Spannschrauben 28 der Klemmvorrichtung 1 dienen, die in diesem Fall nicht direkt gegen die Klemmbacken 3a, 3b bzw. 4a, 4b, sondern gegen die Aussenflächen der Pollerplatten 11, 12 angepresst sind. Letztere sind kreisförmig ausgebildet und weisen umfänglich eine Ringnut 14 auf zur Aufnahme eines Seilzugs beispielsweise in Gestalt von Abspannstruppen 15a, 15b, mit denen das Drahtseil 2 mittels eines nicht dargestellten Flaschenzugs gespannt ist.

Zur Positionierung und Befestigung der Pollerplatten 11, 12 an der Klemmvorrichtung 1 weisen sie mittig angeordnete Ansätze 16 auf, die in entsprechende Bohrungen 17 des einen Klemmbackenpaares 4a, 4b einführbar sind und mit je zwei U-förmigen Kupplungselementen 18a, 18b der Pollerplatten 11, 12 zusammenwirken, die ihrerseits in entsprechende Nuten 19a, 19b des anderen Klemmbackenpaars 3a, 3b koppelbar sind. Auf diese Weise entsteht zwischen der Klemmvorrichtung 1 und den Pollerplatten 11 und 12 eine formschlüssige Verbindung, welche jedoch die Klemmwirkung der Klemmbacken auf das Drahtseil 2 in keiner Weise beeinträchtigt.

Beim beschriebenen Ausführungsbeispiel sind die Pollerplatten 11 und 12 am vorderen Ende der Klemmvorrichtung installiert. Es ist aber selbstverständlich im Rahmen der Erfindung auch möglich, sie etwa mittig in der Klemmvorrichtung zu platzieren, indem die Bohrungen 17 sowie die Nuten 19a, 19b auf die Klemmbackenmitte verlagert werden. Die zur Befestigung der Pollerplatten verwendeten Spannschrauben weisen naturgemäss eine grössere Baulänge auf als die übrigen Spannschrauben.

Einer Vorrichtung könnten auch mehr als zwei paarweise vorgesehene Klemmbacken zugeordnet sein.

## Patentansprüche

1. Vorrichtung zum Befestigen eines Drahtseils, mit Klemmbacken, die mit Spannschrauben an das Drahtseil anpressbar sind, wobei paarweise vorgesehene Klemmbacken (3a, 3b bzw. 4a, 4b) gebildet sind, **dadurch gekennzeichnet, dass**
die Vorrichtung durch zwei vorgesehene Klemmbackenpaare (3a, 3b bzw. 4a, 4b) gebildet ist, wobei deren Klemmbacken (3a, 3b bzw. 4a, 4b) mit je einem annähernd trapezförmigem Querschnitt gebildet sind, und die Vorrichtung im zusammengebauten Zustand einen prismatischen Körper mit annähernd viereckigem Querschnitt bildet, der mit zwischen den Klemmbacken (3a, 3b; 4a, 4b) diagonal verlaufenden Trennfugen (9) versehen ist, wobei innere Schmalseiten (5) der Klemmbacken (3a, 3b bzw. 4a, 4b) das Drahtseil (2) in zwei senkrecht zueinander gerichteten Diametralebenen umzufassen geeignet sind und äussere Breitseiten (6)
der Klemmbacken als Stützflächen für die zweireihig angeordneten Spannschrauben (7a, 7b bzw. 8a, 8b) des jeweiligen Klemmbackenpaars (3a, 3b) dienen, wobei die Spannschrauben des jeweiligen Klemmbackenpaars (3a, 3b) raumsparend durch die Zwischenräume zwischen den Spannschrauben des anderen Klemmbackenpaars (4a, 4b) geführt sind.

2. Vorrichtung nach Anspruch 1, **dadurch gekennzeichnet, dass**
der Querschnitt der Klemmbacken (3a, 3b; 4a, 4b) und die Zwischenräume zwischen den Spannschrauben (7a, 7b bzw. 8a, 8b) so aufeinander abgestimmt sind, dass die Klemmbacken bei Einhaltung der erforderlichen Festigkeit möglichst kleinbauend sind und somit ein minimiertes Eigengewicht erhalten.

3. Vorrichtung nach Anspruch 1 oder 2, **dadurch gekennzeichnet, dass**
die Spannschrauben (7a, 7b; 8a, 8b) gleichmässig über die wirksame Baulänge der Klemmbacken (3a, 3b bzw. 4a, 4b) verteilt sind.

4. Vorrichtung nach einem der Ansprüche 1 bis 3, **dadurch gekennzeichnet, dass**
jede Reihe Spannschrauben (7a, 7b; 8a, 8b) die gleiche Anzahl wie die gegenüberliegende Reihe von Spannschrauben beinhaltet.

5. Vorrichtung nach einem der Ansprüche 1 bis 4 in Kombination mit einem zu befestigenden Drahtseil, **dadurch gekennzeichnet, dass**
die Anzahl und/oder Stärke der Spannschrauben (7a, 7b, 8a, 8b) so festgelegt sind, dass dies in Abhängigkeit vom Durchmesser und/oder der Zugbeanspruchung des zu befestigenden Drahtseils (2) erfolgt.

6. Vorrichtung nach einem der Ansprüche 1 bis 5 in Kombination mit einem zu befestigenden Seil, **dadurch gekennzeichnet, dass**
die Klemmbacken (3a, 3b; 4a, 4b) an ihrer schmalen Längsseite (5) mit sich über die wirksame Baulänge der Klemmbacken erstreckenden Einlagen (10) aus einem Material versehen sind, welches sich für die entsprechende Seiloberfläche eignet.

7. Vorrichtung nach einem der Ansprüche 1 bis 6, **dadurch gekennzeichnet, dass**
sie vorzugsweise an dem einen Vorrichtungsende mit vorzugsweise zwei daran befestigten Pollerplatten (11, 12) einer Poller-Abspannvorrichtung (13) versehen ist.

8. Vorrichtung nach Anspruch 7, **dadurch gekennzeichnet, dass**
als Befestigungsmittel vier Spannschrauben (28) der Klemmvorrichtung dienen.

9. Vorrichtung nach Anspruch 7 oder 8, **dadurch gekennzeichnet, dass**
die Pollerplatten (11, 12) scheibenförmig ausgebildet sind und umfänglich mit einer Ringnut (14) zur Aufnahme eines Seilzugs (15a, 15b) versehen sind.

10. Vorrichtung nach einem der Ansprüche 7 bis 9, **dadurch gekennzeichnet, dass**
die Pollerplatten (11, 12) mittig angeordnete runde Ansätze (16) aufweisen, die in entsprechende Bohrungen (17) des einen Klemmbackenpaars (4a, 4b) einführbar sind und mit je zwei U-förmigen Kupplungselementen (18a, 18b) der Pollerplatten (11, 12) zusammenwirken, die in entsprechende Nuten (19a, 19b) des anderen Klemmbackenpaars (3a, 3b) koppelbar sind.

## Claims

1. Device for fastening a wire rope, with clamping jaws, which can be pressed onto the wire rope with tensioning screws, whereby pairwise provided clamping jaws (3a, 3b or 4a, 4b) are formed, **characterized in that**
the device is formed by two pairs of clamping jaws (3a, 3b or 4a, 4b), whereby their clamping jaws (3a, 3b or 4a, 4b) are shaped each with an approximately trapezoidal cross-section, and the device in the assembled state forms a prismatic body with an approximately quadrangular cross-section, which is provided with separating joints (9) running diagonally between the clamping jaws (3a, 3b; 4a, 4b), whereby inner narrow sides (5) of the clamping jaws (3a, 3b or 4a, 4b) are appropriate to encompass the wire rope (2) in two mutually perpendicular diametrical planes and outer broad sides (6) serve as support surfaces for the clamping screws (7a, 7b or 8a, 8b) of the respective pair of clamping jaw (3a, 3b), which are arranged in two rows, whereby the clamping screws of the respective pair of clamping jaws (3a , 3b) are guided in a space-saving manner through the interspaces between the clamping screws of the other pair of clamping jaw (4a, 4b).

2. Device according to claim 1, **characterized in that**
the cross-section of the clamping jaws (3a, 3b; 4a, 4b) and the interspaces between the clamping screws (7a, 7b or 8a, 8b) are coordinated one after another so that the clamping jaws while maintaining the required strength are built as small as possible and thus have a minimized dead weight.

3. Device according to Claim 1 or 2, **characterized in that**
the clamping screws (7a, 7b; 8a, 8b) are evenly distributed over the effective overall length of the clamping jaws (3a, 3b or 4a, 4b).

4. Device according to one of Claims 1 to 3, **characterized in that**
each row of tensioning screws (7a, 7b; 8a, 8b) contains the same number as the opposite row of tensioning screws.

5. Device according to one of claims 1 to 4 in combination with a wire rope, which has to be fastened, **characterized in that**
the number and / or strength of the tensioning screws (7a, 7b, 8a, 8b) is specified so that this is in dependence on the diameter and/or the tensile stress of the wire rope (2), which has to be fastened.

6. Device according to one of Claims 1 to 5 in combination with a wire rope, which has to be fastened, **characterized in that**
the clamping jaws (3a, 3b; 4a, 4b) are provided on their narrow longitudinal side (5) with inserts (10) made of a material which extend over the effective overall length of the clamping jaws, which is suitable for the corresponding rope surface.

7. Device according to one of Claims 1 to 6, **characterized in that**
it is preferably provided at one end of the device with preferably two bollard plates (11, 12) of a bollard bracing device (13) attached thereto.

8. Device according to claim 7, **characterized in that** four clamping screws (28) of the clamping device serve as fastening means.

9. Device according to claim 7 or 8, **characterized in that**
the bollard plates (11, 12) are disc-shaped and are provided with an annular groove (14) around the circumference for receiving a cable (15a, 15b).

10. Device according to one of claims 7 to 9, **characterized in that**
the bollard plates (11, 12) have centrally arranged round attachments (16), which can be inserted into corresponding bores (17) of one pair of clamping jaws (4a, 4b) and each with two U-shaped coupling elements (18a, 18b) of the bollard plates (11, 12) cooperate, which can be coupled into corresponding grooves (19a, 19b) of the other pair of clamping jaws (3a, 3b).

## Revendications

1. Dispositif de fixation d'un câble métallique par des mâchoires de serrage, qui peuvent être pressées par des vis de blocage sur le câble métallique, des mâchoires (3a, 3b et 4a, 4b) de serrage prévues par paire étant formées, **caractérisé en ce que**
le dispositif est formé de deux paires (3a, 3b et 4a, 4b) de mâchoires de serrage prévues, ces mâchoires (3a, 3b et 4a, 4b) de serrage étant formées en ayant chacune une section transversale à peu près en forme de trapèze et le dispositif formant à l'état assemblé un corps prismatique de section transversale à peu près rectangulaire, qui est pourvu de joints (9) de séparation, s'étendant en diagonale entre les mâchoires (3a, 3b et 4a, 4b) de serrage, des côtés (5) étroits des mâchoires (3a, 3b et 4a, 4b) de serrage étant propres à prendre le câble (2) métallique dans deux plans diamétrales dirigés perpendiculairement entre eux et des côtés (6) extérieurs larges des mâchoires de serrage servant de surfaces d'appui aux vis (7a, 7b et 8a, 8b) de blocage, disposées suivant deux rangées, de la paire (3a, 3b) de mâchoires de serrage respective, les vis de blocage de la paire (3a, 3b) de mâchoires de serrage respective passant, en économisant de l'espace, dans les espaces intermédiaires entre les vis de blocage de l'autre paire (4a, 4b) de mâchoires de serrage.

2. Dispositif suivant la revendication 1, **caractérisé en ce que**
la section transversale des mâchoires (3a, 3b ; 4a, 4b) de serrage et les espaces intermédiaires entre les vis (7a, 7b, et 8a, 8b) de blocage sont adaptés l'une aux autres, de manière à ce que les vis de serrage soient, tout en conservant la solidité nécessaire, de construction aussi petite que possible et ait ainsi un poids propre minimisé.

3. Dispositif suivant la revendication 1 ou 2, **caractérisé en ce que**
les vis (7a, 7b ; 8a, 8b) de blocage sont réparties uniformément sur la longueur efficace des mâchoires (3a, 3b et 4a, 4b) de serrage.

4. Dispositif suivant l'une des revendications 1 à 3, **caractérisé en ce que**
chaque rangée de vis (7a, 7b ; 8a, 8b) de blocage comporte le même nombre de vis de blocage que la rangée opposée.

5. Dispositif suivant l'une des revendications 1 à 4 en combinaison avec un câble métallique à fixer, **caractérisé en ce que**
le nombre et/ou la force des vis (7a, 7b ; 8a, 8b) de blocage est fixé de manière à ce que cela s'effectue en fonction du diamètre et/ou de la sollicitation en traction du câble (2) métallique à fixer.

6. Dispositif suivant l'une des revendications 1 à 5 en combinaison avec un câble à fixer, **caractérisé en ce que**
les mâchoires (3a, 3b ; 4a, 4b) de serrage sont pourvues, sur leur grand côté (5) étroit, de garnitures (10) s'étendant sur la longueur efficace des mâchoires de serrage, en un matériau qui convient à la surface correspondante du câble.

7. Dispositif suivant l'une des revendications 1 à 6, **caractérisé en ce qu'**
il est pourvu, de préférence à une extrémité du dispositif, de préférence de deux plaques (11, 12) d'attache, qui y sont fixées, d'un dispositif (13) de détente d'attache.

8. Dispositif suivant la revendication 7, **caractérisé en ce que**
quatre vis (28) de blocage du dispositif de serrage servent de moyen de fixation.

9. Dispositif suivant la revendication 7 ou 8, **caractérisé en ce que**
les plaques (11, 12) d'attache sont constituée en forme de disque et sont pourvues sur le pourtour d'une rainure (14) annulaire de réception d'un câble (15a, 15b) de traction.

10. Dispositif suivant l'une des revendications 7 à 9, **caractérisé en ce que**
les plaques (11, 12) d'attache ont au milieu des saillies (16) circulaires, qui peuvent pénétrer dans des trous (17) correspondants de la paire (4a, 4b) de mâchoires de serrage et coopérer avec, respectivement, deux éléments (18a, 18b) en forme de U d'accouplement des plaques (11, 12) d'attache, qui peuvent être conjuguées de rainures (19a, 19b) correspondantes de l'autre paire (3a, 3b) de mâchoires de serrage.
